# EUROPEAN PATENT APPLICATION

(11) **EP 4 807 665 A1**
(43) Date of publication of application: **16.09.2026**
(21) Application number: 26162972.9
(22) Date of filing: 06.03.2026
(51) Int. Cl.: G06T 5/60, G06T 5/77

(54) **A ZERO-SHOT SOLVER FOR UNIVERSAL IMAGE RESTORATION BASED ON OFF-THE-SHELF DIFFUSION MODEL**

(30) Priority: 11.03.2025 IN 202511022022
(71) Applicant: Dolby Laboratories Licensing Corporation, San Francisco, CA 94103 (US)
(72) Inventor: Zhang, Lijun, San Francisco, 94103 (US); Lee, Dae Yeol, San Francisco, 94103 (US); GEHLOT, Shiv, c/o Dolby Laboratories Licensing Corporation, 94103-1410 (US); SU, Guan-Ming, Sunnyvale, 94085-4703 (US)
(74) Representative: Dolby International AB Patent Group Europe

(57) **Abstract**

A method and apparatus of a device restoring an image a training-free, zero-shot manner is described. In an exemplary embodiment, the device can receive an original image. In addition, the device can diffuse the image over a plurality of timestep using a trained diffusion model in an outer loop, wherein at each of the plurality of timesteps, an intermediate image is optimized using a degradation model using an inner loop. The device further can recover the restored image at the end of the plurality of timesteps.

## Description

### CROSS-REFERENCE TO RELATED APPLICATIONS

This application claims the benefit of priority from Indian Application No. 202511022022, filed on 11 March 2025, which is incorporated by reference herein in its entirety.

### TECHNOLOGY

The present invention relates generally to image processing. More particularly, an embodiment of the present invention relates to using a zero-shot solver for universal image restoration based on off-the-shelf diffusion model.

### BACKGROUND

Data is the core of modern artificial intelligence (Al) systems, particularly in computer vision (CV) applications where image quality pays significant role. However, image quality often degrades due to factors like capture conditions, storage limitations, transmission errors, and rendering issues. Image restoration and enhancement techniques aim to reverse these degradations, thereby improving image quality for downstream tasks such as robotic navigation and autonomous driving.

### SUMMARY

**A** method and apparatus of a device restoring an image a training-free, zero-shot manner is described. In an exemplary embodiment, the device can receive an original image. In addition, the device can diffuse the image over a plurality of timestep using a trained diffusion model in an outer loop, wherein at each of the plurality of timesteps, an intermediate image is optimized using a degradation model using an inner loop. The device further can recover the restored image at the end of the plurality of timesteps.

Other methods and apparatuses are also described.

### BRIEF DESCRIPTION OF THE DRAWINGS

The present invention is illustrated by way of example and not limitation in the figures of the accompanying drawings in which like references indicate similar elements.
Figure 1 shows an example of a system that can be used in one or more embodiments of the invention.
Figure 2 shows an example of an illustration of an image restoration pipeline that can be used in one or more embodiments of the invention.
Figure 3 shows an example of an illustration of an image restoration pipeline using a learnable degradation model that can be used with one or more embodiments of the invention.
Figure 4 shows an example of an illustration of an image restoration pipeline using a Deblurring Specialized Model (DBSM) that can be used with one or more embodiments of the invention.
Figure 5 shows an example of an illustration of an image restoration pipeline using a Low-Light Enhancement Specialized Model (LLSM) that can be used with one or more embodiments of the invention.
Figure 6 shows, in a flow diagram, an example of a process for image restoration that can be used with one or more embodiments of the invention.
Figure 7 shows, in a flow diagram, an example of a process for image optimization that can be used with one or more embodiments of the invention.
Figure 8 shows an example of a data processing system that can be used to perform or implement one or more embodiments of the invention.

### DETAILED DESCRIPTION

Various embodiments and aspects will be described with reference to details discussed below, and the accompanying drawings will illustrate the various embodiments. The following description and drawings are illustrative and are not to be construed as limiting. Numerous specific details are described to provide a thorough understanding of various embodiments. However, in certain instances, well-known or conventional details are not described in order to provide a concise discussion of embodiments.

Reference in the specification to "one embodiment" or "an embodiment" means that a particular feature, structure, or characteristic described in conjunction with the embodiment can be included in at least one embodiment. The appearances of the phrase "in one embodiment" in various places in the specification do not necessarily all refer to the same embodiment. The processes depicted in the figures that follow are performed by processing logic that comprises hardware (e.g., circuitry, dedicated logic, etc.), software, or a combination of both. Although the processes are described below in terms of some sequential operations, it should be appreciated that some of the operations described may be performed in a different order. Moreover, some operations may be performed in parallel rather than sequentially.

The embodiments described herein can be used in apparatuses which include one or more processors in a processing system, and which include memory and which are configured to perform any one of the methods described herein. Moreover, the embodiments described herein can be implemented using non-transitory machine-readable storage media storing executable computer program instructions which when executed by a machine cause the machine to perform any one of the methods described herein.

The embodiments described herein can be used to restore an image. In one embodiment, data is the core of modem AI systems, particularly in computer vision (CV) applications where image quality pays significant role. However, image quality often degrades due to factors like capture conditions, storage limitations, transmission errors, and rendering issues. Image restoration and enhancement techniques aim to reverse these degradations, thereby improving image quality for downstream tasks such as robotic navigation and autonomous driving.

In image restoration and enhancement, multiple types of distortions can occur. These distortions are generally categorized into two groups: 1) Known inverse problems, such as image deblurring, inpainting, and super-resolution, where the degradation model is usually known; and 2) Unknown degraded problems, such as low-light enhancement and high dynamic range (HDR) image recovery, where the degradation model is non-linear and unknown, 3) super-resolution, 4) colorization, and 5) deblurring. In one embodiment, the common approach to address these distortions is to train neural networks like Convolutional Neural Networks (CNNs), Generative Adversarial Networks (GANs), or Diffusion Models using supervised learning. Alternatively, more advanced techniques attempt to handle various image restoration tasks with a single unified model. However, despite learning various distortion distributions simultaneously, the performance of these unified models still heavily relies on the training datasets. Particularly, when dealing with unseen distortion types during testing, supervised learning-based methods cannot adapt to new scenarios effectively.

In one embodiment, a proposed method has the following properties: 1) a unified degradation model; 2) the ability to solve combined distortions; and 3) faster processing speeds. In this embodiment, image deblurring (representative of linear distortion) and low-light image enhancement (representative of non-linear distortion) are illustrated below.

In a further embodiment, formulating the image restoration task as an optimization problem integrated into the image generation process of a well-trained diffusion model is proposed. In this embodiment, image generation is formulated as the outer loop, with image restoration as the inner loop. The outer loop follows an image sampling process, such as Denoising Diffusion Probabilistic Models (DDPM), in a well-trained diffusion model. Within each timestep of image generation, the inner loop conducts the image restoration by optimizing a learnable degradation model and performing the intermediate clean image estimation through numerous iterations guided by a predefined loss function. During this restoration process, the degradation model gradually predicts the distortion applied to the clean image, while the intermediate clean image estimation, initially fed a random image, progressively converges to the content of the given input image when degraded by the predicted degradation model. Ultimately, the diffusion model generates an image under the content guidance of the given degraded image and recovers the image from the predicted degradation model. In one embodiment, instead of taking minutes, the processing time for the described image restoration is in the seconds.

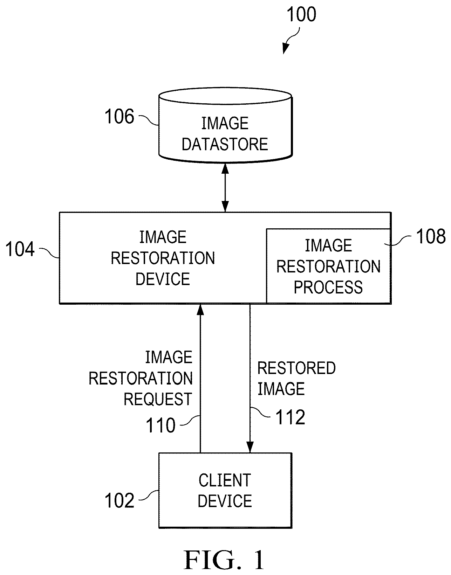

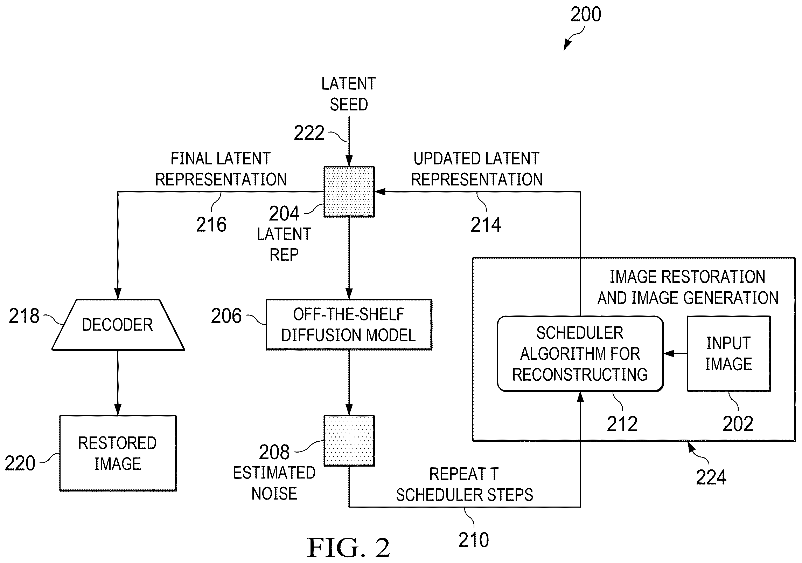

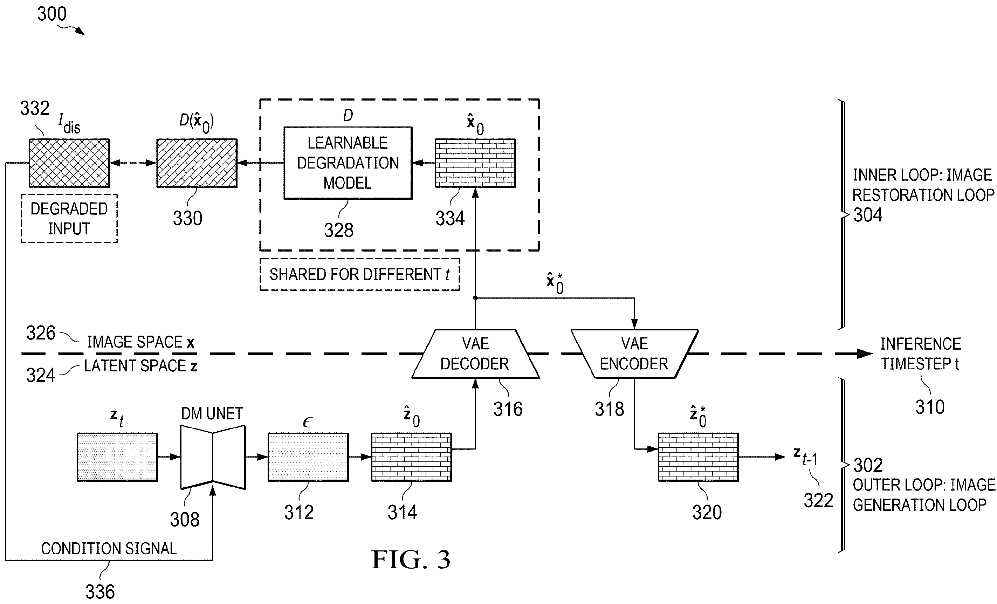

Figure 1 shows an example of a system that can be used in one or more embodiments of the invention. In one embodiment, the system 100 includes a client device 102 coupled to an image restoration device 104. In this embodiment, the image restoration device 104 restores an image using an outer loop with an image sampling process in a

well-trained diffusion mode and using an inner loop that conducts image restoration by optimizing a learnable degradation model and performs the intermediate clean image estimation through numerous iterations guided by a predefined loss function. Furthermore, the image datastore 106 can store images before and/or after the image restoration. In addition, the image restoration device 104 includes an image restoration process 108 that performs the image restoration loops. In one embodiment, a client device 102 requests that an image be restored (110), the image restoration device 104 restores the image using the image restoration process 108. In this embodiment, the client device can send the image to the image restoration device 104 or can send a reference to the image requesting to be restored (e.g., stored in the image datastore 106). The image restoration device 104 restores the image (112) and sends the restored image to back to the client. While in one embodiment, the client device 102 and the image restoration device 104 are separate devices, in an alternate embodiment, the client device 102 and the image restoration device 104 can be the same device. In this embodiment, a process (not illustrated) would request the image to the restored from the image restoration process 108. In one embodiment, the image restoration process 108 uses an outer image generation loop and an inner image restoration loop as descried in Figures 2 and 3 below.

In one embodiment, the client device 102, and/or image restoration device 104 can independently be a server, personal computer, laptop, camera, smartphone, or another device that can process an image.

Figure 2 shows an example of an illustration of an image restoration pipeline 200 that can be used in one or more embodiments of the invention. In one embodiment, the image restoration 200 includes an outer loop that includes receiving a latent seed 222 to produce a latent representation 204. In one embodiment, the latent seed 222 is a sample from a Normal distribution N(0,1) that is used to produce a latent representation (204). The latent representation is diffused using a diffusion model (206) (e. g., Dual Mode UNET model, where UNET is a convolutional neural network that was developed for image segmentation) to estimate the noise 208. In one embodiment, an alternate diffusion model can be used. The estimated noise 208 is used for an image restoration and image generation inner loop 224 using a scheduler algorithm for reconstructing 212 and the input image 202. The inner loop 224 is further described in Figure 3 below. From the image restoration and image generation inner loop 224, an updated latent representation 214 is generated. This outer loop is repeated for T scheduler steps 210 (e.g., *T* timesteps). The latent representation at the end the *T* scheduler steps is a final latent representation 216, which is then decoded by a decoder (218) to generate the restored image 220. In one embodiment, the decoder (218) is a Variational Autoencoder (VAE) decoder.

In one embodiment, the Zero-Shot Universal Image Restoration (ZS-UIR) problem can be formulated as an optimization problem within the image generation process of a diffusion model that utilizes the image priors in well-trained diffusion models and accelerating the restoration process. In addition, a unified degradation model capable of restoring blurry images, low-light images, and images with combined distortions can be used. Furthermore, the use of off-the-shelf diffusion models to manipulate images in the latent space results in faster image generation. In one embodiment, zero-shot learning in deep learning aims to enable models to make predictions on new, unseen classes without needing additional training data. In this embodiment, this can be achieved by leveraging self-supervised learning techniques, where the model learns to predict parts of the data from other parts. Self-supervised learning is a form of unsupervised learning where the model trains itself using the data's inherent structure. For example, by generating its own labels from the data, the model learns useful representations without explicit human-annotated labels. In one embodiment, real-world applications of self-supervised learning include predicting the next word in a sentence or colorizing grayscale images using RGB information.

In a further embodiment, the self-supervised learning method is used to achieve zero-shot image restoration based on the well-trained diffusion models. In this embodiment, the image restoration tasks are formulated as an optimization problem, which can involve four components. While in one embodiment, four components are illustrated for the image restoration task, in alternate embodiment, more or less components can be used. The first component is the optimization variable that the model adjusts to solve the optimization problem. The second component is the optimization objective that defines the goal of optimization, often formulated as a loss function. The third component is the optimization strategy, which controls the policy for updating the optimization variable. Lastly, the fourth component optimization solver updates the optimization variable according to the objective function. In essence, the model iteratively improves its predictions by updating its optimization variable through the selected solver and pre-defined strategy to minimize the optimization objective.

Figure 3 shows an example of an illustration of an image restoration pipeline 300 using a learnable degradation model that can be used with one or more embodiments of the invention. In Figure 3, the image restoration pipeline 300 presents a comprehensive illustration of the proposed image restoration method, which innovatively integrates an optimization approach within the framework of a pre-trained diffusion model. The pipeline 300 is structured into two primary components: an outer loop 302 dedicated to image generation and an inner loop focused on image restoration 304.

In one embodiment, the image restoration 304 for different distortion types in a zero-shot manner is described. In particular, a zero-shot self-supervised learning framework for image restoration using pre-trained diffusion models is illustrated that incorporates conditional guidance with a learnable degradation model into the image generation loop. This guidance, combined with rich image priors from well-trained diffusion models, allows that image restoration task to work in a zero-shot manner without explicitly training the diffusion model on new datasets.

The outer loop, termed the Image Generation Loop 302, embodies an image sampling process using a diffusion model. In one embodiment, Figure 3 illustrates the two different loop (302 and 304) operating at a specific timestep *t* 310 so as to simplify the explanation. At each timestep 310, the diffusion model 308 performs the reverse diffusion process through a two-step approach. First, diffusion model 308 estimates the noise ***ε*** 312 in the current latent feature **z***ₜ* (306) through the well-trained noise estimator, e.g., the DM UNet. In one embodiment (and if available), the degraded input ***I**_{dis}* 332 is used as a condition signal (336) for the diffusion model 308 to estimate the noise *ε* 312. The pipeline 300 derives the intermediate initial latent representation **ẑ**₀ (314).

At this point, the pipeline 300 incorporates a significant modification to an original diffusion model process. In the standard approach, the latent feature for the next timestep **z**_{*t*-1} 322 would be obtained directly from **ẑ**₀ 314 by adding a calculated amount of noise. Instead, the pipeline 300 integrates an inner loop 304 at this stage to perform image content and restoration guidance. This inner loop optimizes **ẑ**₀ 314 to produce ${\hat{z}}_{0}^{∗}$ 320, which is then used to transition to **z**_{*t*-1} 322. In one embodiment, the pipeline 300 samples the noise vector **z** (not illustrated) and computes the latent feature for the next timestep *z*_{*t*-1} 322 using Equation (1) below, ${z}_{t - 1} = \frac{\sqrt{{α}_{t - 1}} {β}_{t}}{1 - {\overline{α}}_{t}} {\hat{z}}_{0}^{∗} + \frac{\sqrt{{α}_{t} \left(1-{\overline{α}}_{t - 1}\right)}}{1 - {\overline{α}}_{t}} {z}_{t - 1} + {β}_{t} z$ where ${\left\{{β}_{t}∈\left(0, 1\right)\right\}}_{t = 1}^{T}$ is the variance schedule, *αₜ =* 1 - *βₜ*, and ${\overline{α}}_{t} = {\prod }_{i = 1}^{t} {α}_{i}$. In one embodiment, this step is used so that the optimization process remains integrated with the underlying diffusion model dynamics.

In one embodiment, at the last timestep of the outer loop produces ${\hat{z}}_{0}^{∗}$ 320, which is used by pipeline 300 to generate **z**_{*t*-1} 322. At the last timestep, ***z***_{*t*-1} 322 is the final latent representation (e.g., the final latent representation 216 as illustrated in Figure 2 above).

In one embodiment, this modification allows for the integration of image restoration processes within the generative framework of the diffusion model. By optimizing the intermediate latent representation before progressing to the next timestep 310, the pipeline 300 enables a content-aware restoration that leverages the powerful generative capabilities of the diffusion model while incorporating specific guidance for image enhancement and restoration tasks.

In this embodiment, nested within each timestep 310 of the outer loop 302, the inner loop 304, designated as the Image Restoration Loop, executes an iterative optimization process for image restoration. This loop is characterized by several key components: a Learnable Degradation Model 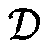 328, that adapts to various distortion types; Variational Autoencoders (VAE) Encoder 318 and Decoder 316 modules, the two prepared parts in well-trained diffusion, for seamless translation between image and latent spaces; and an optimization objective 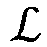 (e.g., a loss function) that guide the restoration process. In one embodiment, the Decoder 316 transitions the computation from the latent space 324 to the image space 326. Conversely, the Encoder 318 transitions the computation from the image space 326 to the latent space 324. For example, and in one embodiment, the Decoder 316 maps **ẑ**₀ 314 to **x̂**₀ 334, which is then processed by the learnable degradation model D 328.

In one embodiment, operating in latent space 324 significantly enhances computational efficiency. Denoising and sampling processes are accelerated, reducing computational costs while maintaining high-quality image generation. Additionally, this approach contributes to more stable training dynamics. The image space, however, affords the opportunity to perform the image restoration loop 304. While in one embodiment, the diffusing of the Image Generation Loop 302 is performed in the latent space, in alternate embodiments, the diffusing of loop 304 can be performed in the image space 326. In one embodiment, when doing the diffusing in the image space 326, pipeline 300 may perform slower than performing the diffusing in the latent space 324.

The inner loop's primary objectives are twofold: to optimize a learnable degradation model 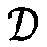 328 for predicting the distortion applied to the clean image, and to refine the intermediate clean image estimation **x̂**₀ 334, (e.g., an image version of **ẑ**₀ 314), such that the intermediate clean image estimation **x̂**₀ 334 aligns with the content of the degraded input ***I**_{dis}* 332 when subjected to the predicted degradation model. In one embodiment, the degraded input ***I**_{dis}* 332 is a distorted image that results from distortion applied to the clean image. This process unfolds through multiple iterations, guided by the loss function 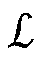 . In one embodiment, the loss function is designed to consider the L2 norm of the residual image ***I**ᵣₑₛ* (not illustrated), an image quality term on the intermediate clean image **x̂**₀ 334, and the L2 distance between the degraded estimation 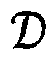 (x̂₀) 330 and the degraded input ***I**_{dis}* 332. In one embodiment, the degraded input ***I**_{dis}* 332 is used as a condition signal (336) for the diffusion model 308 to estimate the noise *ε* 312.

In one embodiment, this unified approach allows the capability to handle a diverse range of distortion types, including combined distortions, facilitates zero-shot image restoration without the necessity for specific training on each degradation type, and potentially offers improvements in processing speed compared to predecessor methods.

In one embodiment, in formulating the image restoration problem as an optimization task, there are two key variables that form the core of this approach: the degradation model and the intermediate clean image estimation. These variables work jointly to capture the essence of the distortion process and guide the restoration towards an optimal solution.

In one embodiment, the degradation model, denoted as 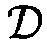 (·) 328, serves as a learnable function that aims to simulate the distortion process applied to the original clean image. Unlike traditional methods that often rely on fixed, predefined degradation models, the pipeline 300 allows 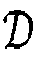 (·) 328 to adapt dynamically to the specific distortions present in the input image. This flexibility enables the pipeline 300 to handle a wide range of distortion types, including complex scenarios where multiple distortions coexist.

In a further embodiment, complementing the degradation model is the intermediate image estimation, represented as **x̂**₀ 334. This variable represents an evolving hypothesis of the clean, restored image. In one embodiment, **x̂**₀ 334 can be transformed from **ẑ**₀ 314, which is initially a random latent representation. Consequently, **x̂**₀334 begins as a random noise in the image space and undergoes iterative refinement throughout the optimization process. The goal is for **x̂**₀ 334 to converge towards an estimation that, when subjected to the learned degradation model 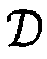 (·) 328, closely approximates the given distorted input image. In this embodiment, the interplay between these two variables can be useful. As the degradation model 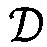 (·) 328 learns to more accurately represent the distortion process, the degradation model 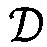 (·) 328 provides better guidance for refining **x̂**₀ 334. Conversely, improvements in **x̂**₀ 334 offer more precise information for updating 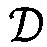 (·) 328, creating a synergistic optimization loop.

As illustrated in Figure 3, the degradation model 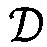 (·) 328 takes **x̂**₀ 334 as input to generate a degraded version of it. Different degradation models 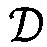 (·) 328 can be used. For example, and in one embodiment, for a blurry image, the degradation model 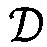 (·) 328 would be: ${D}_{blur} \left({\hat{x}}_{0}\right) : {\hat{x}}_{0} \to \left({\hat{x}}_{0}⊗k\right)$ where *k* refers to the blur kernel.
In another embodiment, a low-resolution (LR) image is obtained by further down sampling the blurry image with a scaling factor s, ${D}_{LR} \left({\hat{x}}_{0}\right) : {\hat{x}}_{0} \to \left({\hat{x}}_{0}⊗k\right) ↓ s$ For an inpainting task, an image with missing pixels (mp) is obtained by randomly dropping n% of pixels through a binary mask (*m*). Here, ⊙ refers to a pointwise or Hadamard product operation. ${D}_{mp} \left({\hat{x}}_{0}\right) = {\hat{x}}_{0} \to \left({\hat{x}}_{0}⊙m\right)$ For the colorization task, the degradation model 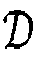 (·) maps RGB to gray image by averaging or weighted averaging of the RGB channels. ${D}_{gray} : {ℝ}^{H \times W \times 3} \to {ℝ}^{H \times W}$ Apart from inpainting, may be fixed or can be updated during the optimization process. For example, and in one embodiment, the blur kernel can be frozen or updated during the optimization process. For low-light enhancement, the predefined degradation model 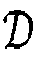 328 is unknown, however, it can be formulated as ${D}_{LOL} \left({\hat{x}}_{0}\right) : {\hat{x}}_{0} \to {\hat{x}}_{0} \times γ + {I}_{res} ,$ where γ is a scalar factor, ***I**ᵣₑₛ* is a vector of the same dimension as **x̂**₀ 334 representing the residual between clean and distorted image. In this embodiment, these factors can be randomly initialized and optimized during the inference process. Notably, 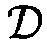 (·) 328 is shared across the sampling timesteps 310.

In a further embodiment, for handling combined degradations, such as low-light enhancement coupled with deblurring, 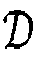 328 is modeled as a sequence of individual degradation steps applied to the input, ${D}_{LOL - blur} \left({\hat{x}}_{0}\right) : {\hat{x}}_{0} \to \left({\hat{x}}_{0}⊗k\right) \times γ + {I}_{res}$ Similarly, other combined degradation model can be defined as follows: ${D}_{blur - mp} \left({\hat{x}}_{0}\right) : {\hat{x}}_{0} \to m ⊙ \left({\hat{x}}_{0}⊗k\right)$ ${D}_{LOL - mp} \left({\hat{x}}_{0}\right) : {\hat{x}}_{0} \to m ⊙ \left({\hat{x}}_{0}\times γ+{I}_{res}\right)$ ${D}_{blur - gray - mp} \left({\hat{x}}_{0}\right) : {\hat{x}}_{0} \to m ⊙ {D}_{gray} \left({\hat{x}}_{0}⊗k\right)$ where, equations (8), (9), and (10), are for combinations of blur + missing pixels, low light + missing pixels, and blur + grayscale + missing pixels, respectively. By treating both the degradation model and the intermediate image estimation as optimization variables, ZS-UIR simultaneously discovers the underlying distortion mechanism and restores the clean image all within the framework of a pre-trained diffusion model, achieving restoration across a wide spectrum of image degradation scenarios.

In one embodiment, by treating both the degradation model and the intermediate image estimation as optimization variables, the pipeline 300 allows for a high degree of adaptability. For example, and in one embodiment, this pipeline 300 allows for the simultaneous discovery of the underlying distortion mechanism and the restoration of the clean image, within the framework of a pre-trained diffusion model. Such a unified treatment of diverse distortion types sets the pipeline 300 apart, enabling zero-shot restoration capabilities across a broad spectrum of image degradation scenarios.

In another embodiment, the optimization objective in the pipeline 300 serves a dual purpose: to ensure fidelity to the original distorted image content while simultaneously enhancing the overall image quality. To achieve this balance, a comprehensive loss function 340 is used that incorporates multiple components, each addressing specific aspects of the restoration process.

In one embodiment, the total loss function 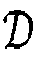 is composed of four main terms: $L = {λ}_{1} {\left‖D\left({\hat{x}}_{0}\right)-{I}_{dis}\right‖}_{2}^{2} + {λ}_{2} Q \left({\hat{x}}_{0}\right) + {λ}_{3} {\left‖{I}_{res}\right‖}_{2}^{2} + {λ}_{4} TV \left({\hat{x}}_{0}\right)$
- *Image Content Fidelity Loss:* The first term, ${\left‖D\left({\hat{x}}_{0}\right)-{I}_{dis}\right‖}_{2}^{2}$, measures the L2 distance between the degraded version of the estimated clean image 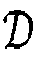 (x̂₀) 330 and the given degraded input ***I**_{dis}*. This term can be used to ensures that the restoration process remains faithful to the content of the original distorted image.
- *Image Quality Loss:* The second term, 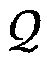 (**x̂**₀), is designed to guide the optimization towards improved image quality. In one embodiment, this quality loss is further decomposed into two components which are exposure control loss and color constancy loss. In a further embodiment, a more advanced image quality loss can be introduced to further improve restoration performance.
   *∘ Exposure Control Loss:* This loss helps to achieve a balanced exposure across the entire image, which is formulated as, ${Q}_{1} \left({\hat{x}}_{0}\right) = \frac{1}{N} {\sum }_{k = 1}^{N} \left|{LR}_{k}\left({\hat{x}}_{0}\right)-E\right|$ where *LRₖ*(*x̂*₀) is the *k*-th non-overlapping local region in the estimated clean image **x̂**₀, *N* stands for the number of such local regions of a pre-defined size 4 × 4, and E is set as the gray level in the RGB color space.
   ∘ *Color Constancy Loss:* This loss to is used to correct potential color deviations in the restored image, which is formulated as, ${Q}_{2} \left({\hat{x}}_{0}\right) = {\sum }_{∀ \left(m, n\right) ∈ \left\{\left(R, G\right), \left(R, B\right), \left(G, B\right)\right\}} {\left(E\left({\hat{x}}_{0}^{m}\right)-E\left({\hat{x}}_{0}^{n}\right)\right)}^{2}$ where $E \left({\hat{x}}_{0}^{m}\right)$ is the average intensity value of m channel in the estimated clean image **x̂**₀, (m, n) represents a pair of channels. This loss helps to maintain proper color relationships among the three adjusted channels.
- *Regularization term on Residual Image:* The third term, ${\left‖{I}_{res}\right‖}_{2}^{2}$, applies an L2 norm regularization on the residual image ***I**ᵣₑₛ*. This regularization helps to control the magnitude of the residual, preventing excessive modifications to the original image and promoting a more stable optimization process.
- *Total variation term on the estimated clean image* (**x̂**₀) : The fourth term is a total variation regularization term to encourage piecewise smoothness while preserving edges. It is used for reconstruction tasks to have smooth natural images while keeping important structures (edges) intact. It is formulated as, $TV \left({\hat{x}}_{0}\right) = {\sum }_{i , j} \left(\left|{\hat{x}}_{0}\left(i+1,j\right)-{\hat{x}}_{0}\left(i, j\right)\right|+\left|{\hat{x}}_{0}\left(i,j+1\right)-{\hat{x}}_{0}\left(i, j\right)\right|\right)$ where (*i,j*) refers to the pixel index in **x̂**₀.

By combining these loss components, in one embodiment, the optimization objective effectively guides the restoration process towards a solution that not only removes distortions but also enhances the overall visual quality of the image. The relative weights of these components can be adjusted through the *λ* weight to fine-tune the balance between content fidelity and quality enhancement for different types of distortions and image scenarios. For example, and in one embodiment, *λ*₄ can be non-zero for inpainting image restorations and zero for other types of image restorations. Furthermore, *λ*₃ can be non-zero for low light enhancement tasks and zero for other types of tasks. In a further example, the values of *λ*₁*, λ*₂, *λ*₃, *λ*₄ can have different values as needed.

For example, and in one embodiment, in the cases of covering low light enhancement and blur together, the loss function can be written as: $L = {λ}_{1} {\left‖D\left({\hat{x}}_{0}\right)-{I}_{dis}\right‖}_{2}^{2} + {λ}_{2} Q \left({\hat{x}}_{0}\right) + {λ}_{3} {\left‖{I}_{res}\right‖}_{2}^{2}$ since, *λ*₃ is non-zero for low light enhancement and *λ*₄ can be zero if not involving inpainting task. Here, the 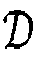 is defined as equation (7).
In another example and embodiment, in the cases of covering missing pixels and blur together, the loss function can be written as: $L = {λ}_{1} {\left‖D\left({\hat{x}}_{0}\right)-{I}_{dis}\right‖}_{2}^{2} + {λ}_{2} Q \left({\hat{x}}_{0}\right) + {λ}_{4} TV \left({\hat{x}}_{0}\right)$ since, *λ*₃ is zero for non-low light enhancement and *λ*₄ is non-zero for inpainting task. Here, the 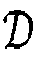 is defined as in equation (8). While in one embodiment, the loss function 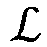 has four components, in alternate embodiments, the loss function 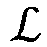 can include more, less, and/or different components.

In a further embodiment, the complexity of pipeline 300, which involves optimizing both the parameters of the degradation model and the intermediate clean image estimation, necessitates a carefully designed optimization strategy. To ensure stable convergence and effective learning, the pipeline 300 adopts an iterative learning approach that separately updates the model parameters and the input estimation. In one embodiment, the optimization strategy is motivated by the observation that simultaneous optimization of all variables can lead to instability and poor convergence. This can happen here, where the degradation model 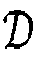 (·) 328 and the intermediate clean image estimation **x̂**₀ 334 are interdependent yet serve distinct roles in the restoration process. Therefore, the pipeline 300 implements an iterative learning scheme that alternates between updating these two sets of variables.

The iterative learning process can be summarized as follows:
**1.** Parameter Update: In this step, the pipeline 300 fixes the current estimate of **x̂**₀ 334 and optimize the parameters of the degradation model 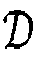 (·) 328. By focusing on the model parameters, pipeline 300 allows the degradation model to adapt to the current image estimate without being influenced by simultaneous changes in the input.
**2.** Input Update: Following the parameter update, pipeline 300 fixes the newly optimized degradation model and update the intermediate clean image estimation **x̂**₀ 334. This step allows the image estimate to evolve based on the most recent degradation model, improving its quality and fidelity to the original content.
**3.** Iteration: Steps 1 and 2 are repeated for a predetermined number of iterations. This iterative process allows for gradual refinement of both the degradation model and the image estimation, leading to more stable and consistent improvements.

To implement the iterative learning strategy and optimize both the degradation model parameters and the intermediate clean image estimation, pipeline 300 employs gradient descent as an optimization solver. This widely used optimization technique allows us to efficiently navigate the complex loss landscape defined by the objective function. Table 1 illustrates pseudocode for the zero-shot image restoration method based on an off-the-shelf diffusion model. Specifically, the optimization process is integrated into the reverse diffusion process of the pretrained diffusion model, allowing for content-aware image restoration. 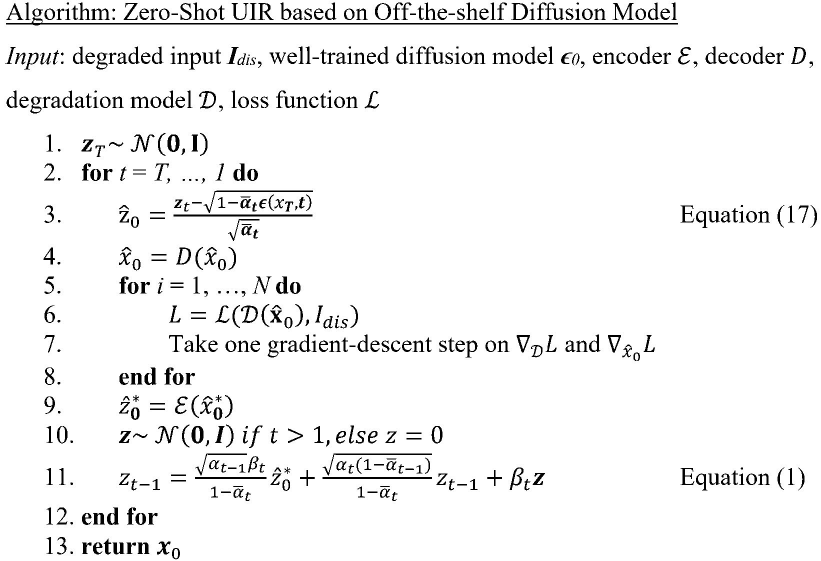 Table 1. The proposed algorithm for zero-shot image restoration based on off-the-shelf diffusion model. Note that Line 4-8 is the inner loop for image content and restoration guidance.

In one embodiment, the algorithm begins with the initialization of **x***_{T}* from a standard normal distribution (line 1). The outer loop (lines 2-12) represents the reverse diffusion process, iterating from timestep *T* to 1 (310). At each timestep 310, pipeline 300 estimates the initial ẑ₀ using Equation (17), which is derived from the diffusion model theory. ${z}_{0} = \frac{{z}_{t} - \sqrt{1 - {\overline{α}}_{t} ϵ \left({x}_{T}, t\right)}}{\sqrt{{\overline{α}}_{t}}}$ The inner loop (lines 4-9) constitutes the core of the optimization process:
1. The pseudocode computes the loss 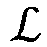 using Equation (11), which combines the content loss, quality loss, and regularization term (line 6).
2. The pseudocode performs one gradient descent step on the degradation model parameters (e.g., for the low light enhancement and blur case: *k, γ,* and *Iᵣₑₛ*) (line 7).
3. The pseudocode takes an additional gradient descent step on the estimated clean image **x̂**₀ to get the optimized ${\hat{x}}_{0}^{∗}$ (line 7).
After the inner optimization loop, the pseudocode samples the noise vector **z** (line 10) and computes the latent feature for the next timestep *z*_{*t*-1} using Equation (1) (line 11) above. In one embodiment, this step is used so that the optimization process remains integrated with the underlying diffusion model dynamics. At the end, the pseudocode returns get the restored image **x**₀.

As described above, ZS-UIR has introduced the methods that are used to solve the zero-shot image restoration problem. In one embodiment, the proposed zero-shot method is designed to operate directly on individual input images without requiring external training data. This flexibility is a key advantage of the zero-shot approach, enabling it to potentially generalize to unseen distortions and real-world scenarios beyond the scope of an initial test dataset. In another embodiment, a specialized kernel can be used for specific types of image restoration, such restoring blurred image or images taken in low light.

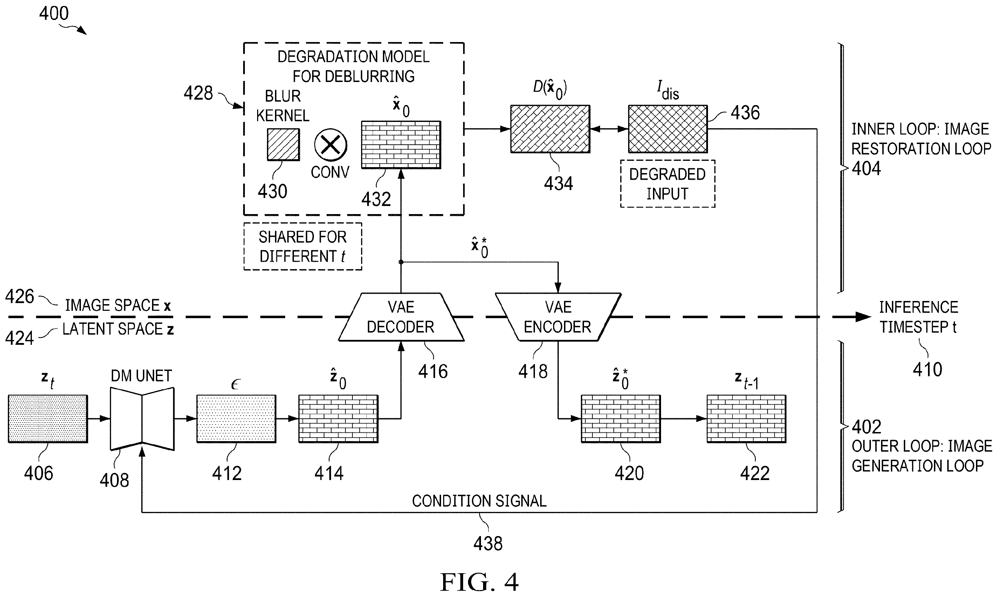

Figure 4 shows an example of an illustration of an image restoration pipeline 400 using a Deblurring Specialized Model (DBSM) that can be used with one or more embodiments of the invention. In Figure 4, (and as in Fig. 3), there is an image generation loop 402 and an image restoration loop 404. In one embodiment, this pipeline 400 model focuses on the deblurring task by optimizing the Blur kernel *k* 430 specifically for blur removal. The corresponding degradation model 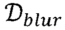 428 is used as illustrated in Equation (2) , where **x̂**₀ 432 is intermediate image estimation as described in Figure 3 above.

In addition, the degradation model 428 includes a blur kernel 430. The modified pipeline 400 is shown in Figure 4, where the degradation model 428 and the loss function are adapted to image deblurring. In Figure 4, the outer image generation loop (402) performs as described in Figure 3 for *zₜ* 406, DM UNET 408, ε 412, **ẑ**₀ 414, decoder 416, encoder 418, ${\hat{z}}_{0}^{∗}$ 420, and **z**_{*t*-1} 422 along the inference timesteps 410. In a further embodiment, the degradation model 428 is used to generate ${\hat{x}}_{0}^{∗}$ that is encoded by the encoder 418 to produce ${\hat{z}}_{0}^{∗}$ as described in Figure 3 above. As described above in Figure 3, the degradation model 428 is used to generate an estimated degraded image 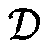 (x̂₀) 434. The modified loss function 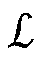 is used to measure a L2 distance between the degraded estimation 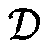 (**x̂**₀) 434 and the degraded input ***I**_{dis}* 436, and can be expressed as $L = {λ}_{1} {\left‖D\left({\hat{x}}_{0}\right)-{I}_{dis}\right‖}_{2}^{2} + {λ}_{2} Q \left({\hat{x}}_{0}\right)$ since, *λ*₃ is zero for non-low light enhancement tasks and *λ*₄ can be zero if not involving inpainting task. 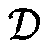 is defined as in equation (2) above. In one embodiment (and if available), the degraded input ***I**_{dis}* 436 is used as a condition signal (438) for the diffusion model 408 to estimate the noise *ε* 412. Furthermore, in one embodiment and as described in Figure 3 above, the Encoder 416 transitions the computation from the latent space 424 to the image space 426. Conversely, the Decoder 418 transitions the computation from the image space 426 to the latent space 424.

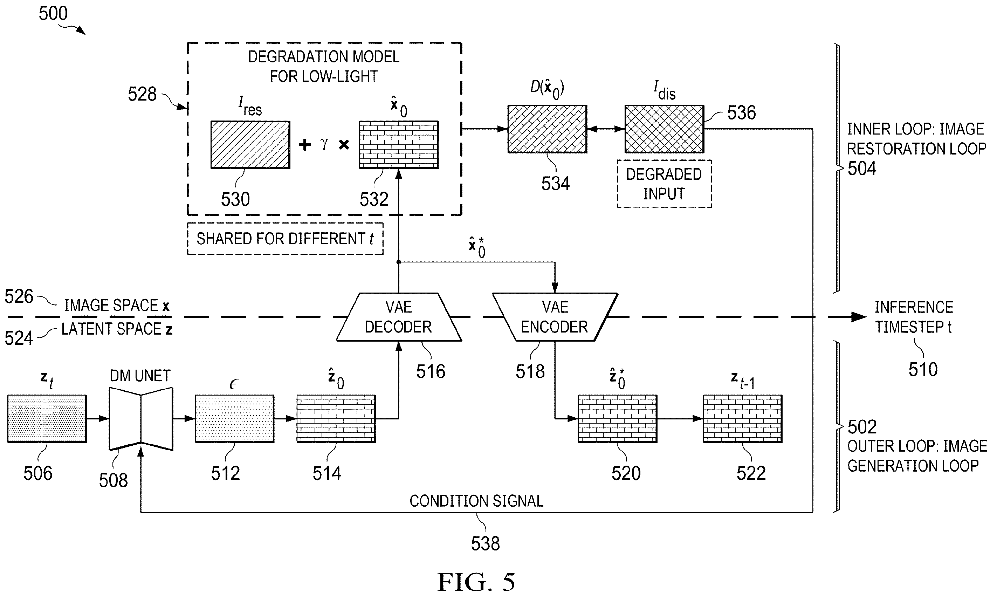

In one embodiment, another type of degradation model can be used for the restoration of low-light images. Figure 5 shows an example of an illustration of an image restoration pipeline 500 using a Low-Light Enhancement Specialized Model (LLSM) that can be used with one or more embodiments of the invention. In Figure 5, (and as in Fig. 3), there is an image generation loop 502 and an image restoration loop 504. In addition, a Low-Light Enhancement Specialized Model (LLSM) is used to address low-light conditions, concentrating on exposure adjustment without considering blur. The corresponding degradation model is as illustrated in Equation (6) above, where **x̂**₀ 532 is an intermediate image estimation and ***I**ᵣₑₛ* 530 is a vector of the same dimension as **x̂**₀ 532 representing the residual between clean and distorted image as described in Figure 3 above. The modified pipeline is shown in Figure 5, where the degradation model 528 is changed to low-light image enhancement. In Figure 5, the outer image generation loop 502 performs as described in Figure 3 for **z***ₜ* 506, DM UNET 508, ε 512, ẑ₀ 514, decoder 516, encoder 518, ${\hat{z}}_{0}^{∗}$ 520, and **z**_{*t*-1} 522 along the inference timesteps 510. In a further embodiment, the degradation model 528 is used to generate ${\hat{x}}_{0}^{∗}$ that is processed by the VAE encoder 518 to produce ${\hat{z}}_{0}^{∗}$ 520 as described in Figure 3 above. As described above in Figure 3, the degradation model 528 is used to generate an estimated clean 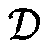 (x̂₀) 534. The modified loss function 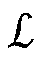 is used to measure a L2 distance between the degraded estimation 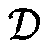 (x̂₀) 534 and the degraded input ***I**_{dis}* 536 can be expressed as, $L = {λ}_{1} {\left‖D\left({\hat{x}}_{0}\right)-{I}_{dis}\right‖}_{2}^{2} + {λ}_{2} Q \left({\hat{x}}_{0}\right) + {λ}_{3} {\left‖{I}_{res}\right‖}_{2}^{2}$ since, from the general loss function in equation (11), *λ*₄ is zero if not involving inpainting task. In one embodiment (and if available), the degraded input ***I**_{dis}* 536 is used as a condition signal (538) for the diffusion model 508 to estimate the noise *ε* 512. 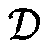 here is defined as equation (6) as above. Furthermore, in one embodiment and as described in Figure 3 above, the Encoder 516 transitions the computation from the latent space 524 to the image space 526. Conversely, the Decoder 518 transitions the computation from the image space 526 to the latent space 524.

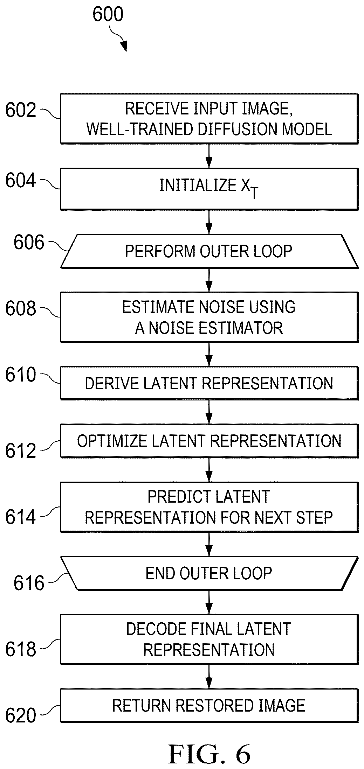

Figure 6 shows, in a flow diagram, an example of a process 600 for image restoration that can be used with one or more embodiments of the invention. In one embodiment, an image restoration device performs process 600 to restore an image, such as the image restoration device 104 as described in Figure 1 above. In Figure 6, process 600 begins by receiving an input image and a well-trained diffusion model at block 602. In one embodiment, the well-trained diffusion model is the DM UNET model. In one embodiment, a DM UNET model is used which uses a convolution neural network (CNN). In alternate embodiments, another architecture of diffusion model can be used (e.g., Transformer, Diffusion Transformer (DiT), U-ViT (which combines U-Net and Vision Transformer (ViT), and/or another type of diffusion model. At block 604, process 604 initializes **x***_{T}* from a standard normal distribution. Process 600 performs an outer loop (blocks 606-616) to restore the image using an image generation loop with an inner image restoration loop. At block 608, process 600 estimates the noise using a noise estimator. In one embodiment, noise estimation may be performed using a well-trained noise estimator trained on a large-scale dataset.

In one embodiment, process 600 uses a forward diffusion process in diffusion models involves the gradual application of Gaussian noise to an input image over a predefined number of timesteps, typically denoted as *T*. This process begins with the original, uncorrupted image at *t* = 0 and progressively introduces noise at each subsequent step. As the timestep *t* increases, the image becomes increasingly degraded. This results in a sequence of progressively noisier versions of the original image, culminating at *t = T* where the image has been transformed into pure noise, effectively removing all discernible features of the original input. This process can be visualized as a gradual transition from a clear, information-rich image to a completely random noise distribution.

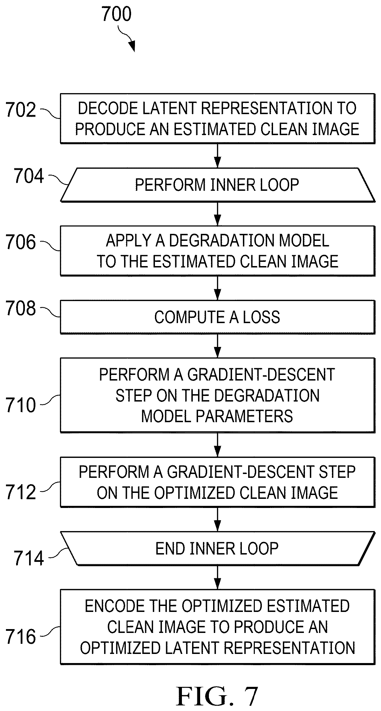

Process 600 derives a latent representation **ẑ**₀ at block 610. In one embodiment, process 600 derives the latent representation as described in Figure 3 above. At block 612, process 600 optimizes the latent estimation to generate ${\hat{z}}_{0}^{∗}$. In one embodiment, process 600 performs an image restoration loop as described in Figure 3 above using one of the kernels described in Figures 3-5 above. In this embodiment, by optimizing the latent representation using the image restoration loop, process 600 generates ${\hat{z}}_{0}^{∗}$ that is used to predict **z**_{*t*-1} as described in Figure 3 above. The image restoration loop is further described in Figure 7 below. Process 600 predicts the latent feature for the next step at block 614. In one embodiment, process 600 uses ${\hat{z}}_{0}^{∗}$ to predict **z**_{*t*-1} as described in Figure 3 above. At block 616, the outer loop ends. Process 600 decodes the final latent representation at block 618. In one embodiment, the final latent representation is the latent representation generated at the end of the outer loop. In this embodiment, process 600 decodes the final latent representation using a decoder such as the decoder as described in Figure 2 above. In one embodiment, after *T* timesteps, process 600 returns the restored image at block 620.

As described above, process 600 optimizes the latent representation using an image restoration loop. Figure 7 shows, in a flow diagram, an example of a process 700 for image optimization that can be used with one or more embodiments of the invention. In one embodiment, a process can perform process 700 in order to optimize an intermediate image in the image generation loop, such as process 600 illustrated in Figure 6, block 612 above. In Figure 7, process 700 begins by decoding the latent representation to produce an estimated clean image at block 702. In one embodiment, process 700 decodes the latent representation using a VAE decoder. In this embodiment, by decoding the latent estimation, process 700 moves the image processing from the latent space ***z*** to an image space ***x*** as described in Figure 3 above. At block 704, process 700 performs an inner loop (blocks 704-714) to compute an optimized clean image. At block 706, process 700 applies a degradation model to the clean image. In one embodiment, process 700 applies a learnable degradation model 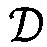 for predicting the distortion applied to the clean image as described in Figure 3 above. Process 700 computes a loss at block 708. In one embodiment, process 700 uses a loss function to compute a L2 distance between the degraded estimation 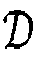 (x̂₀) and the degraded input ***I**_{dis}* as described in Figure 3 above.

A block 710, process 700 performs a gradient-descent step on the degradation model parameters. Process 700 performs an additional gradient step on the on optimized clean image at block 712. In one embodiment, process 700 performs the gradient-descent step on the estimated clean image **x̂**₀ to get the optimized ${\hat{x}}_{0}^{∗}$ as described in Figure 3 above. The inner loop ends at block 714. At block 716, process 700 encodes the optimized estimated clean image to produce an optimized latent estimation. In one embodiment, by encoding the optimized estimated clean image and producing an optimized latent estimation, process 700 moves back from the image space to the latent space.

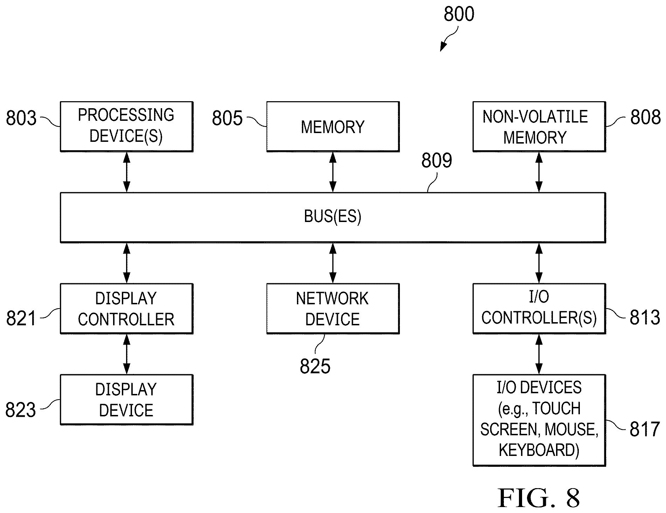

Figure 8 shows an example of a data processing system 800 that can be used by or in a camera or other device to provide one or more embodiments described herein. The systems and methods described herein can be implemented in a variety of different data processing systems and devices, including general-purpose computer systems, special purpose computer systems, or a hybrid of general purpose and special purpose computer systems. Data processing systems that can use any one of the methods described herein include a camera, a smartphone, a set top box, a computer, such as a laptop or tablet computer, embedded devices, game systems, and consumer electronic devices, etc., or other electronic devices.

Figure 8 is a block diagram of data processing system 800 hardware according to an embodiment. Note that while Figure 8 illustrates the various components of a data processing system, it is not intended to represent any particular architecture or manner of interconnecting the components as such details are not germane to the present invention. It will also be appreciated that other types of data processing systems that have fewer components than shown or more components than shown in Figure 8 can also be used with one or more embodiments of the present invention.

As shown in Figure 8, the data processing system 800 includes one or more buses 809 that serve to interconnect the various components of the system. The system in Figure 8 can include a camera or be coupled to a camera. One or more processing devices 803 are coupled to the one or more buses 809 as is known in the art. Memory 805 may be DRAM or non-volatile RAM or may be flash memory or other types of memory or a combination of such memory devices. This memory is coupled to the one or more buses 809 using techniques known in the art. The data processing system can also include non-volatile memory 808, which may be a hard disk drive or a flash memory or a magnetic optical drive or magnetic memory or an optical drive or other types of memory systems that maintain data even after power is removed from the system. The non-volatile memory 808 and the memory 805 are both coupled to the one or more buses 809 using known interfaces and connection techniques. A display controller 821 is coupled to the one or more buses 809 in order to receive display data to be displayed on a display device (823) which can be one of displays. The data processing system 800 can also include one or more input/output (I/O) controllers 813 which provide interfaces for one or more I/O devices, such as one or more cameras, touch screens, ambient light sensors, and other input devices including those known in the art and output devices (e.g., speakers). The input/output devices 817 are coupled through one or more I/O controllers 813 as is known in the art. The ambient light sensors can be integrated into the system in Figure 8.

While Figure 8 shows that the non-volatile memory 808 and the memory 805 are coupled to the one or more buses directly rather than through a network interface, it will be appreciated that the present invention can utilize non-volatile memory that is remote from the system, such as a network storage device which is coupled to the data processing system through a network interface such as a modem or Ethernet interface. The buses 809 can be connected to each other through various bridges, controllers and/or adapters as is well known in the art. In one embodiment the I/O controller 813 includes one or more of a USB (Universal Serial Bus) adapter for controlling USB peripherals, an IEEE 1394 controller for IEEE 1394 compliant peripherals, or a Thunderbolt controller for controlling Thunderbolt peripherals. In one embodiment, one or more network device(s) 825 can be coupled to the bus(es) 809. The network device(s) 825 can be wired network devices (e.g., Ethernet) or wireless network devices (e.g., Wi-Fi, Bluetooth) that receive images from a camera, etc.

Although separate embodiments are enumerated below, it will be appreciated that these embodiments can be combined or modified, in whole or in part, into various different combinations. The combinations of these embodiments can be any one of all possible combinations of the separate embodiments.

Embodiment 1 is a method to restore an image in a training-free, zero-shot manner, the method comprising:
receiving an original image; and
diffusing the image over a plurality of timesteps using a trained diffusion model in an outer loop, wherein at each of the plurality of timesteps, an intermediate image is optimized using a degradation model using an inner loop; and
recovering the restored image at the end of the plurality of timesteps

Embodiment 2 is a method of embodiment 1, wherein the degradation model is a learnable degradation model.

Embodiment 3 is a method of embodiment 2, wherein the degradation model includes a kernel.

Embodiment 4 is a method of embodiment 1, wherein the degradation model is one of a blur degradation model, low-resolution degradation model, missing pixels degradation model, grayscale degradation model, low-light enhancement degradation model, low-light enhancement and blurring degradation model, blurring and missing pixels degradation model, low-light enhancement and missing pixels degradation model, and blurring-grayscale-missing pixels degradation model.

Embodiment 5 is a method of embodiment 1, wherein the diffusing is performed in a latent space.

Embodiment 6 is a method of claim 1, wherein the inner loop estimates a degradation parameter for the degradation model.

Embodiment 7 is a method of claim 6, wherein the inner loop estimates a clean image of the original image.

Embodiment 8 is a method of claim 1, wherein the diffusing comprises:
creating a latent representation;
decoding the latent representation to produce one of the plurality of intermediate images;
applying the degradation model to this intermediate image; and
decoding this intermediate image to produce an updated latent estimation.

Embodiment 9 is a method of embodiment 8, wherein the diffusing further comprises:
obtaining a latent representation for the next timestep from the updated latent representation.

Embodiment 10 is a method of embodiment 1, wherein the trained diffusing model is a noise estimator model.

Embodiment 11 is a method of embodiment 10, wherein the noise estimator is a DM UNET model.

Embodiment 12 is a method of embodiment 1, wherein the trained diffusion model is one of a transformer model, diffusion transformer model, or a U-ViT model.

Embodiment 13 is a method of embodiment 1, wherein the inner loop uses a loss function to optimize the intermediate image.

Embodiment 14 is a method of embodiment 1, wherein the loss function includes one or more loss terms that correspond to an image content fidelity loss, an image quality loss, exposure control loss, color constancy loss, and a regularization term on a residual image.

Embodiment 15 is an apparatus comprising a processing system and memory and configured to perform any one of the methods in embodiments 1-14.

Embodiment 16 is a non-transitory machine-readable storage storing executable program instructions which when executed by a machine cause the machine to perform any one of the methods of embodiments 1-14.

It will be apparent from this description that one or more embodiments of the present invention may be embodied, at least in part, in software. That is, the techniques may be carried out in a data processing system in response to its one or more processors executing a sequence of instructions contained in a storage medium, such as a non-transitory machine- readable storage medium (e.g., DRAM or flash memory). In various embodiments, hardwired circuitry may be used in combination with software instructions to implement the present invention. Thus, the techniques are not limited to any specific combination of hardware circuitry and software, or to any particular source for the instructions executed by the data processing system.

In the foregoing specification, specific exemplary embodiments have been described. It will be evident that various modifications may be made to those embodiments without departing from the broader spirit and scope set forth in the following claims. The specification and drawings are, accordingly, to be regarded in an illustrative sense rather than a restrictive sense.

## Claims

1. A method to restore an image in a training-free, zero-shot manner, the method comprising:
receiving an original image; and
diffusing the image over a plurality of timesteps using a trained diffusion model in an outer loop, wherein at each of the plurality of timesteps, an intermediate image is optimized using a degradation model using an inner loop; and
recovering the restored image at the end of the plurality of timesteps.

2. The method of claim 1, wherein the degradation model is a learnable degradation model.

3. The method of claim 2, wherein the degradation model includes a kernel.

4. The method of claim 1, wherein the degradation model is one of a blur degradation model, low-resolution degradation model, missing pixels degradation model, grayscale degradation model, low-light enhancement degradation model, low-light enhancement and blurring degradation model, blurring and missing pixels degradation model, low-light enhancement and missing pixels degradation model, and blurring-grayscale-missing pixels degradation model.

5. The method of claim 1, wherein the diffusing is performed in a latent space.

6. The method of claim 1, wherein the inner loop estimates a degradation parameter for the degradation model, wherein optionally the inner loop estimates a clean image of the original image.

7. The method of claim 1, wherein the diffusing comprises:
creating a latent representation;
decoding the latent representation to produce one of the plurality of intermediate images;
applying the degradation model to this intermediate image; and
decoding this intermediate image to produce an updated latent estimation.

8. The method of claim 7, wherein the diffusing further comprises:
obtaining a latent representation for the next timestep from the updated latent representation.

9. The method of claim 1, wherein the trained diffusing model is a noise estimator model.

10. The method of claim 9, wherein the noise estimator is a DM UNET model.

11. The method of claim 1, wherein the trained diffusion model is one of a transformer model, diffusion transformer model, or a U-ViT model.

12. The method of claim 1, wherein the inner loop uses a loss function to optimize the intermediate image.

13. The method of claim 12, wherein the loss function includes one or more loss terms that correspond to an image content fidelity loss, an image quality loss, exposure control loss, color constancy loss, and a regularization term on a residual image.

14. An apparatus comprising a processing system and memory and configured to perform any one of the methods in claims 1-13.

15. A non-transitory machine-readable storage storing executable program instructions which when executed by a machine cause the machine to perform any one of the methods of claims 1-13.
